# EUROPEAN PATENT SPECIFICATION

(11) **EP 3 438 488 B1**
(45) Date of publication and mention of the grant of the patent: **16.12.2020**
(21) Application number: 18187388.6
(22) Date of filing: 03.08.2018
(51) Int. Cl.: F16D 7/02, F16D 43/21, F16F 15/129

(54) **A TORQUE LIMITER**
DREHMOMENTBEGRENZER
LIMITEUR DE COUPLE

(30) Priority: 04.08.2017 TR 201711531
(43) Date of publication of application: 06.02.2019
(73) Proprietor: Valeo Otomotiv Sanayi ve Ticaret A.S., 34854 Istanbul (TR)
(72) Inventor: GUL, Cihat, 16240 Bursa (TR); AKAR, Hamdi, 16240 Bursa (TR)
(74) Representative: Cardon, Nicolas

(56) References cited:
- WO-A1-2005/012751
- WO-A1-2018/162683
- DE-A1- 3 141 353
- US-A- 4 545 470
- US-A1- 2013 161 150

## Description

### TECHNICAL FIELD

The invention concerns a torque limiter which limits torque transmission in order to protect motor vehicle systems, especially in vehicles with hybrid drive motors.

### PRIOR STATE OF THE ART

In motor vehicles, the transmission of torque to the gearbox in excess of the desired level causes deterioration in various transmission elements, including gears. Torque limiting mechanisms are used in order to eliminate the aforementioned problem.

In some known solutions, the entire system is halted in order to prevent high torque inflicting damage on the mechanism. Another approach in prior art is that when the torque reaches a predetermined level, slipping is performed by a friction element, for example, by a friction plate, in order to prevent the transmitted torque from exceeding the aforementioned value. Torque limiters which operate in this fashion are known as slip torque limiters.

The most important disadvantage of this type of limiter is that the slip torque value, depending on the production conditions and geometric tolerances, may be far from the ideal value. In prior art, it is extremely difficult to implement a variation in the required limit torque value. The torque limit is generally set at the design stage or before assembling the components of the limiter, and this means that the limiter cannot subsequently be adapted to meet different conditions. Several different approaches are being followed within this technical field.

A patent search found United States Patent and Trademark Office (USPTO) publication number US2002092715A. The invention which is the subject of this application is a vibration damper device equipped with a torque limiter. The vibration damper device which is the subject of the invention includes a pair of friction plates and a drive plate between the aforementioned friction plates which transmits the power received from the input. When the torque exceeds the limit value, the friction plates slip with the drive input from the aforementioned plate, thereby preventing the transfer of excessive torque. In the system in question, the torque limit can only be specified at the design stage.

Another approach encountered was a Japan Patent Office (JPO) document, publication number JP2011089626A. The invention which is the subject of the application is a torque limiter and concerns a torsion damper equipped with a limiter. In the construction of the aforementioned limiter, a diaphragm on which the drive plates in contact with the friction plates are located and the friction plate(s) are positioned between a damper spring and a hub, and the unit operates with the addition of oil to these plates. In the aforementioned system, there is an adjustment element which is directly or indirectly in contact with the friction plates. The torque limit can be altered by changing the force bearing upon the friction plate with the assistance of the adjustment element. In the aforementioned system, it is essential that the torque limit adjustment is carried out when assembling the parts, and it is not possible to modify it at a later date.

Consequently, all of the above problems made it essential to introduce an innovation into the field concerned.

### BRIEF EXPLANATION OF THE INVENTION

The object of the invention is a torque limiter for use in motor vehicles which includes two covers which are connected to one another, an interspace formed between the covers, at least one friction plate within the aforementioned interspace, a drive plate which is in contact with the aforementioned friction plate, and a load element which, by pre-tensioning, applies a force to the friction plate, ***wherein the torque limiter*** includes an adjustment mechanism to adjust the force applied upon the aforementioned friction plates by varying the pre-tensioning of the load element.

In accordance with other advantageous embodiments, such a torque limiter may have one or more of the following features:
- The torque limiter includes an intermediary plate positioned within the aforementioned interspace, at least one of the aforementioned cover and the intermediary plate comprising at least one adjustment element.
- The aforementioned adjustment elements of the aforementioned cover and intermediary plate are provided with at least one projection and one recess, each formed with a slope.
- The aforementioned adjustment elements are projections, one projection of the aforementioned cover coinciding with one projection of the intermediary plate, with at least one projection formed as a slope.
- At least one of the adjustment elements is in the form of a ramp.
- The aforementioned projection is located on the intermediary plate, and the aforementioned recess is located on the cover.
- The aforementioned projection is located on the cover, and the aforementioned recess is located on the intermediary plate.
- The aforementioned adjustment elements include, on their surface, teeth formed in order to engage with each other.
- The surfaces of the aforementioned adjustment elements have a ribbed geometry.
- The aforementioned intermediary plate includes an ear to permit adjustment after installation.
- The aforementioned ear is provided within the internal diameter of the intermediary plate.
- The aforementioned ear is extended axially.
- The ear extends axially on both sides of the cover.
- The ear has a notch in order to facilitate adjustment after installation.

The invention concerns a torque limiter which limits torque production in order to protect motor vehicle systems, especially in vehicles with hybrid drive motors. The limiter which is the subject of the invention comprises two covers which are connected to one another, an interspace arising between these covers, and a damper element connected to the friction plates. A load element is positioned in the interspace in order to apply pressure on the aforementioned plate or friction plate.

An intermediary plate includes a recess or projection in the form of a ramp, while the cover contains a recess or a projection corresponding respectively to the aforementioned projection or recess. The height can be adjusted by travelling the recess and the projection over each other, altering the force impinging on the friction and drive plates, thereby permitting the torque limit to be determined. The system of projections and recesses described may be accessed from the outside of the limiter, so that the positioning of the projections and recesses may be altered after the whole of the system has been installed (the projections and recesses are positioned so that they sit directly one on top of the other in the zero position), and in this way, products in standard production can be adjusted according to various torque limit requirements.

### THE PURPOSE OF THE INVENTION

The purpose of the present invention is to eliminate the problems mentioned above, and to offer a technical innovation in the relevant field.

The principal purpose of the invention is to provide a torque limiter structure which limits torque production in order to protect motor vehicle systems, especially in vehicles with hybrid drive motors.

A further purpose of the invention is to provide a standardised product structure in the torque limiter group.

A further purpose of the invention is to provide a torque limiter structure in which the torque slip value can be adjusted for use in various applications.

In order to achieve all of the aims described above, the present invention, as will emerge from the detailed explanation given below, is a torque limiter for use in motor vehicles which includes two covers which are connected to one another, an interspace formed between the covers, at least one friction plate within the aforementioned interspace, a drive plate which is in contact with the aforementioned friction plate, and a load element which applies force to the friction plate by pre-tensioning. This arrangement provides an adjustment mechanism so that the force applied upon the aforementioned friction plate can be adjusted by varying the pre-tensioning of the load element. Thus, once the vehicle upon which the aforementioned limiter is to be used has been determined, the appropriate torque limit adjustment can be applied.

In the invention, an intermediary plate positioned within the aforementioned interspace and the cover each includes at least one adjustment element. Thus torque limit adjustment is provided by rotating the intermediary plate.

In a preferred embodiment of the invention, the aforementioned ramp is formed to provide an inclined projection and an inclined recess on the aforementioned cover and intermediary plate, configured in such a way that they correspond with one another. Thus, as a result of the rotational movement of the projection over the recess, the distance between the pressure plate and the cover may be increased or reduced, and the pressure value imposed upon the friction plates can thereby be varied.

In a preferred embodiment of the invention, the intermediary plate is a ring.

In another preferred embodiment of the invention, the aforementioned projection and recess surfaces include teeth which are formed so that they engage with each other. This prevents any disruption of the adjustment as a result of the projection and the recess sliding relative to each other after the necessary height adjustment.

In a preferred embodiment of the invention, the aforementioned projection and recess surfaces include a ribbed geometry. The projection and recess structures can thus be locked one upon the other.

In another preferred embodiment of the invention, it contains a pressure plate which transmits the force transmitted from the aforementioned load element to the intermediary plate to the friction plates. Thus the pressure area is broadened.

In a preferred embodiment of the invention, the ring contains a ear to permit adjustment once the aforementioned ring has been installed. This permits easy adjustment of the limiter to the required slip limit.

In another preferred embodiment of the invention, the aforementioned ear is extended axially. This facilitates manual limit adjustment.

In another preferred embodiment of the invention, a notch is provided on the aforementioned ear to facilitate adjustment after assembly. In this way, the torque limit can be adjusted by moving the notch.

The invention concerns also a torque limiter for a driveline of a motor vehicle, the torque limiter comprising :
- a first element arranged to be driven around a rotation axis (X) by the motor of the vehicle, the first element having a first friction surface
- a second element arranged to be driven around the the rotation axis (X) by the first element, the second element having a second friction surface,
- a load element pressing axially the second friction surface towards the first friction surface in order to transmit a torque between the first friction surface and the second friction surface,
wherein the torque limiter comprises an adjustment ring arranged axially between the load element and a supporting element of the first element, the load element having a fulcrum portion in contact with the adjustment ring so that the axially relative position between the supporting element and the fulcrum portion of the load element depends of the relative position between the adjustment ring and the supporting element.

Thus, it's possible to change the load applied by the load element on the frictions surface by changing the position of the adjustment ring with respect to the supporting element.
The torque limiter can contain also one of the pereceedings features and one of the following pressures.
- The first element comprises a first cover, the supporting element being formed on this first cover.
- The second element is a drive plate.
- The torque limiter has a pressure plate which transmits the force transmitted from the aforementioned load element towards the drive plate. Thus the pressure area is broadened.
- The first element comprises a second cover, the drive plate being tightened directly or indirectly between the pressure plate and the second cover.
- Friction linings are arranged between the second cover and drive plate.
- Friction linings are arranged between the pressure plate and drive plate.
- One of the adjustment ring and supporting element has a slope extending along a circular segment in contact with the other of the projection and the recess, the slope being arranged so that a rotation of the adjustment ring relative to the supporting element allows to move axially the fulcrum portion of the load element.
- The adjustment ring comprises a ramp arranged in a recess or on a projection.
- One of the adjustment ring and supporting element is provided with at least one projection and the other of the adjustment ring and supporting element is provided with at least one recess arranged to cooperate with the projection.
- Both of the projection and the recess have a slope, these slopes having a complementary shape in order to have a sufficient contact surface.
- The adjustment ring has a rotation driving mean, such as an ear. Thus the rotation driving mean can be used to rotate the adjustment ring to modify the load of the load element.
- The supporting element is arranged so that the rotation driving mean can be driven without to remove the supporting member.
- The rotation driving mean of the adjustment ring is arranged radially inside the supporting element.
- In plane perpendicular to the axis X passing through the supporting element, the rotation driving mean and the damper, the rotation driving mean of the adjustment ring is arranged radially outside the damper.
- The rotation driving mean extends axially on both sides of the supporting member of the first cover.
- There is an acces gap between the supporting element and a damper connected to the drive plate, to operate or turn the rotation driving mean.
- The adjustment ring has a rotation driving mean arranged radially inside the supporting element, so that the rotation driving mean can be driven to rotate the adjustment ring to modify the load of the load element without to remove the supporting member.
- The pressure plate is linked in rotation with the first cover with teeth.

### BRIEF EXPLANATION OF THE FIGURES

Figure 1 shows a representational aerial view of the limiter which is the subject of the invention.
Figure 2 shows a representational cross section view of the limiter which is the subject of the invention.
Figure 3 shows a representational isometric view of the cover.

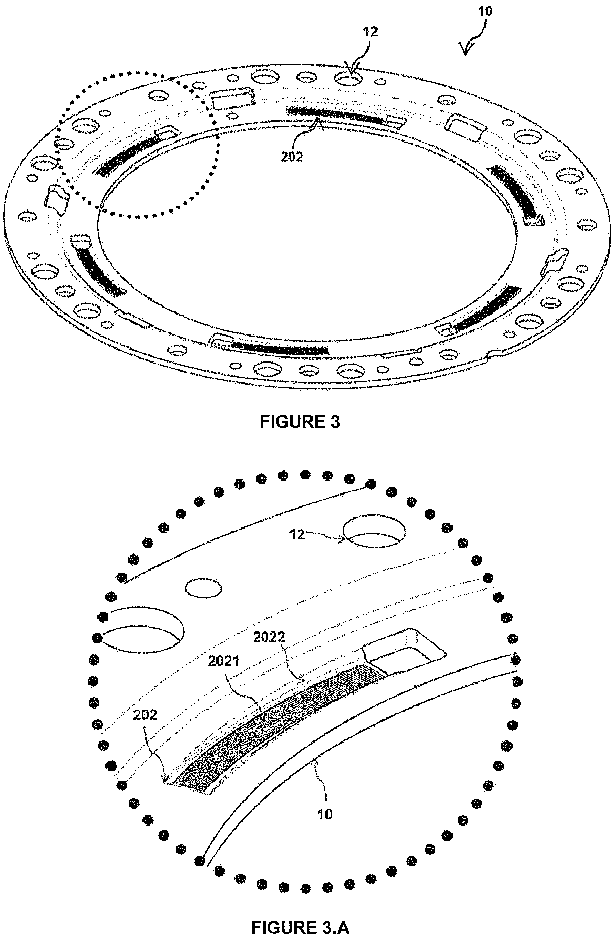

Figure 3.A shows a representational detail view of the recessed section.

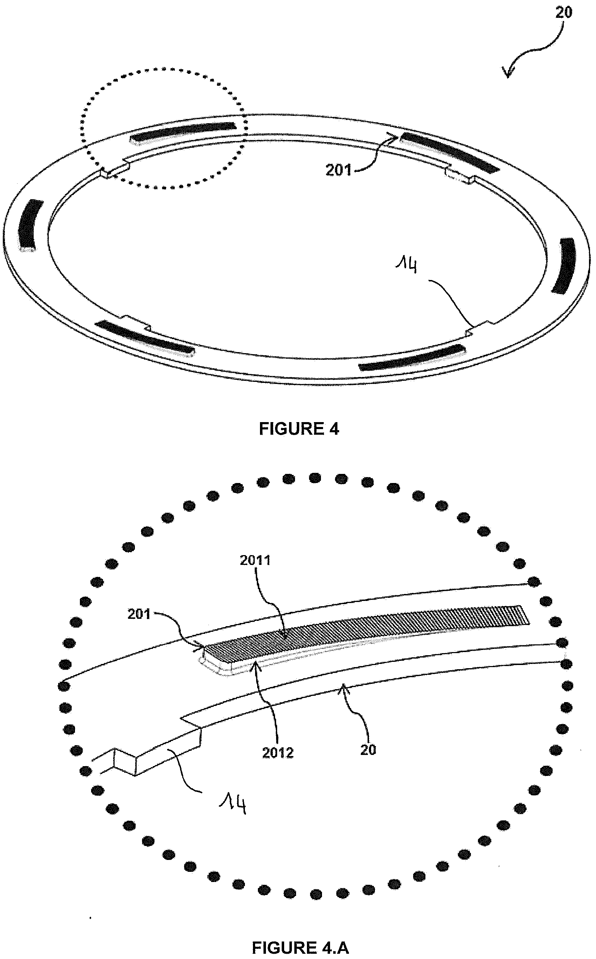

Figure 4 shows a representational isometric view of the ring.
Figure 4.A shows a representational detail view of the projection section.

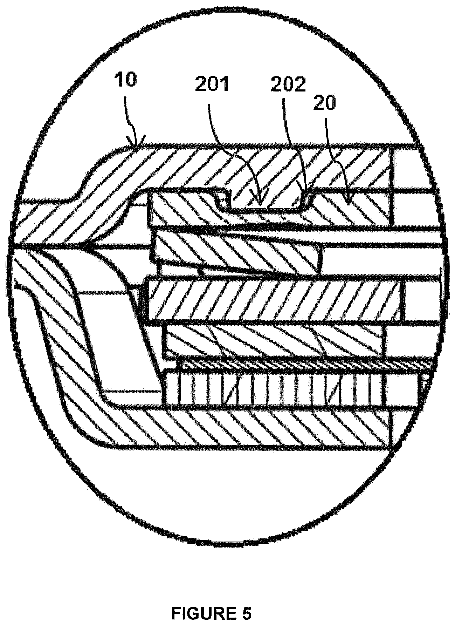

Figure 5 shows a cross section view of an alternative embodiment of the invention.

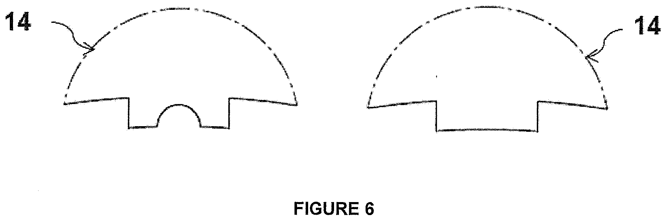

Figure 6 shows a view of alternative embodiments of the adjustment eares.

### KEY TO THE NUMBERS IN THE FIGURES

**1.** Torque Limiter
   **10.** Cover
      **11.** Rivet
      **12.** Hole
      **13.** Gap
      **14.** Ear
   **20.** Intermediary plate
      **201.** Projection
         **2011.** Teeth
         **2012.** Lateral surface
      **202.** Recess
         **2021.** Teeth
         **2022.** Lateral surface
      **21.** Load element
      **22.** Plate
      **23.** Friction plate
      **24.** Drive plate
   **30.** Central plate
      **31.** Damping element
   **40.** Hub
**C.** External diameter

### DETAILED EXPLANATION OF THE INVENTION

In this detailed explanation, in order to clarify the matter, the **torque limiter** (1) which is the subject of the invention is described using examples, which shall be in no way restrictive in their effect.

The subject of the invention is a torque limiter (1) which limits torque production in order to protect motor vehicle systems, especially in vehicles with hybrid drive motors.

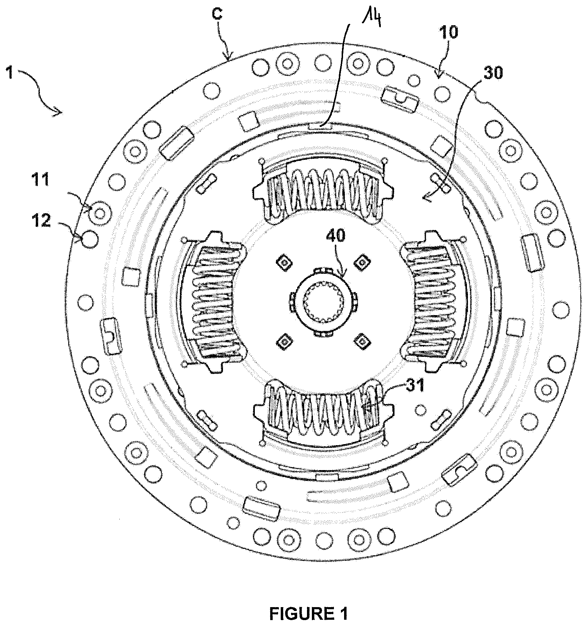

A representational aerial view of the torque limiter (1) which is the subject of the invention is provided in Figure 1. A hub (40) for transfer of the power from the motor located precisely in the centre of the torque limiter (1) and a hub plate which surrounds the aforementioned hub (40), are connected by threads onto the aforementioned hub (40). Two central plates (30) are positioned parallel to the aforementioned hub plate. The damper elements (31) (preferably at least four horizontal springs) are located on the central plate (30). Around the central plate (30) there are two covers (10) and these two covers (10) are connected by rivets (11) located in holes (12) therein.

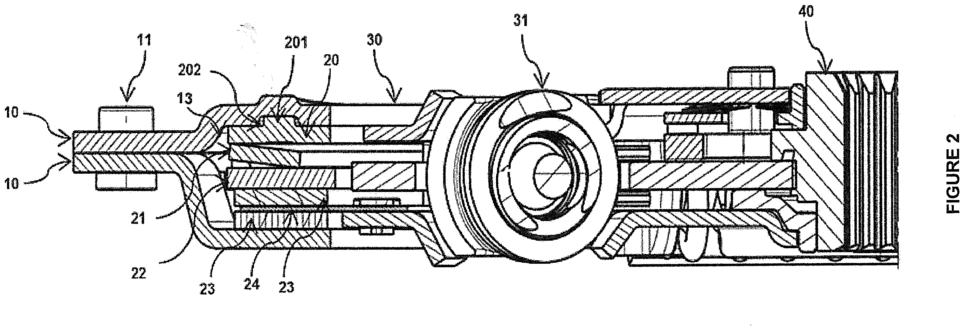

The aforementioned covers (10) are formed so that there is an interspace (13) between them when they are connected. As will be understood from the cross-section view given in Figure 2 and the above description, the aforementioned interspace (13) is formed in such a way that it is outside the damper element (31), or, to put it more clearly, so that it lies between the damper element (31) and external diameter (C) of the cover (10).

As may be seen from Figure 2, there is at least one drive plate (24) extending from the damper element (31) into the aforementioned interspace (13). The number of drive plates (24) may, according to preference, be increased, thus increasing the surface contact with the friction plates (23) which are described later.

Preferably, the invention includes two friction plates (23) within this interspace (13) in order to provide contact with both surfaces of the drive plate (24). The number of friction plates (23) may be increased depending on the number of drive plates (24) included within the limiter (1). The friction plates (23) apply continual pressure on the drive plates (24) but when the torque transferred via the drive plate (24) exceeds the torque limit value, it prevents the transfer of this torque in excess of the previously determined value by ensuring that the drive plate (24) slips over on the friction plates (23). Force is applied to the friction plates (23) by means of an intermediary plate (20) and a load element (21) compressed within the cover (10) and in contact with the intermediary plate (20). On the cover (10), as may be seen in Figure 2, there is a projection (201) and a recess (202) between the cover (10) and the intermediary plate (20). The aformentioned projection (201) and recess (202) have a sloping configuration, and the inclined shape of the projection (201) and recess (202) permits variability in the distance between the intermediary plate (20) and the cover (10) when the recess and the projection are travelled across each other. The cover (10) referred to here may be the upper or lower cover (10) as shown in Figure 2. The one essential requirement in order to produce this technical benefit is that the cover (10) and the intermediary plate (20) must be positioned in such a way that they are in contact with each other.

In accordance with the description given above, the invention is a torque limiter (1) which comprises two covers (10) which are connected to one another, an interspace (13) formed between the covers (10), and at least one friction plate (23) within the aforementioned interspace (13), a drive plate (24) which is in contact with the aforementioned friction plate (23) and a load element (21) which, by pre-tensioning, applies a force to the friction plate, its special property being that it includes an intermediary plate (20) positioned within the aforementioned interspace (13), and an adjustment mechanism to adjust the force applied upon the aforementioned friction plates (23) by varying the pre-tensioning of the load element (21).

The aforementioned adjustment mechanism includes an intermediary plate (20) positioned within the aforementioned interspace (13), the aforementioned cover (10) and at least one adjustment element for each intermediary plate (20). The aforementioned adjustment element is structured so that when travelled over another adjustment element, it will alter the distance between the elements to which both adjustment elements are connected.

In a preferred embodiment of the invention, the aforementioned adjustment elements will coincide with one another between the aforementioned cover (10) and intermediary plate (20), and are provided with at least one projection (201) and one recess (202), each formed with a slope.

In another preferred embodiment of the invention, the aforementioned adjustment elements correspond to one another between the aforementioned cover (10) and intermediary plate (20), and are presented as projections (201), at least one of which is formed with a slope.

In another preferred embodiment of the invention, the aforementioned recess (202) and projection (201) are, according to preference, in the form of a ramp. The recess (202) is in the form of a slot in the element in which it is located. As may be seen in Figure 3 and Figure 3.A., the lateral surface (2022) of the aforementioned recess (202) in the form of a slot progressively increases and creates the form of a ramp. As may be seen in Figure 4 and Figure 4.A., the lateral surface (2012) of the aforementioned projection (201) progressively increases and creates the form of a ramp. The projection (201) is a structure which increases in height outwards on the element on which it is located.

In another preferred embodiment of the invention, the aforementioned projection (201), is located on the intermediary plate (20), and the aforementioned recess (202) is located on the cover (10). This embodiment may be seen in Figures 3, 3.A., 4 and 4.A.

In another preferred embodiment of the invention, the aforementioned projection (201) is located on the cover (10), and the aforementioned recess (202) is located on the intermediary plate (20). This embodiment may be seen in Figure 5.

In an alternative embodiment of the invention, the aforementioned adjustment elements correspond to one another between the aforeaforementioned cover (10) and intermediary plate (20), with at least one projection (201) each provided. According to preference, at least one of the adjustment elements may be in the form of a ramp.

In another preferred embodiment of the invention, adjustment elements include teeth formed in order to engage with each other (2011, 2021). The aforementioned teeth are shown on the recess (201) and projection (202) configuration shown in Figures 3.A. and 4.A., but may also be found on any of the embodiments mentioned above. The aforementioned teeth (2011, 2021) basically permit the projection (201) and the recess (202) to be adjusted in a graduated fashion by travelling them over each other, and permits them to be locked in the required adjustment. The aforementioned teeth (2011, 2021) correspond to one another geometrically, but preferably a triangle-like form will be selected for the teeth (2011, 2021) to provide a saw-tooth or ribbed form on the surfaces of the projection (201) and recess (202).

In an alternative embodiment of the invention, the pressure applied on the friction plates (23) in the torque limiter (1) may be received only from the drive plate (24). But in this case, a thicker drive plate (24) will be selected and therefore the total weight will be increased.

In an alternative embodiment of the invention, the intermediary plate (20) transmits the pressure to the friction plates (23) by means of a load element (21). The load element (21) will be a pressure spring, preferably a Belleville type. The aforementioned load element (21) is in the form of a truncated cone, and comprises only a shell surface.

The eares shown in Figure 3 and 3.A. (14) extend, as may be seen in Figure 1, beyond the outside of the limiter (1) after installation, in order to permit enable external intervention.

In a preferred embodiment of the invention, the aforementioned ear (14) is fitted within the internal diameter of the intermediary plate (20) and extends axially. In order to facilitate adjustment after installation, there may be a notch on the ear (14) .

During installation, the aforementioned projections (201) and recesses (202) will be positioned so that they correspond exactly one above the one another (zero position). When the interspace at which the aforementioned limiter (1) is to be used is selected, the torque limit is adjusted by travelling the intermediate plate (20) by means of the ear (14) to provide the appropriate distance. Figure 6 shows various ear (14) arrangements.

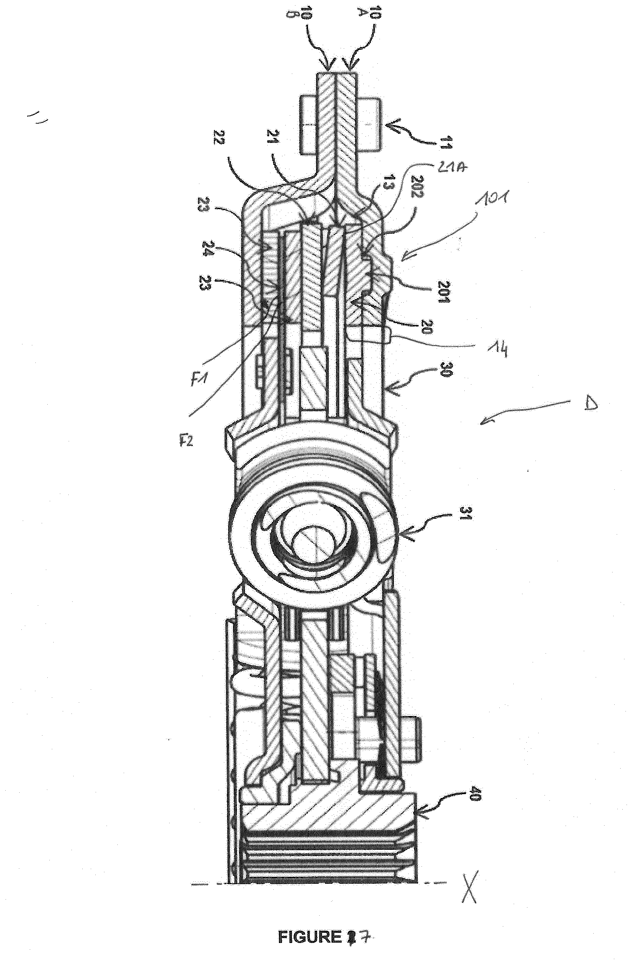

Figure 7 is an other illustration a torque limiter for a driveline of a motor vehicle.

The torque limiter comprises
- a first element 10 arranged to be driven around a rotation axis (X) by the motor of the vehicle, the first element having a first friction surface F1.
- a second element 24 arranged to be driven around the the rotation axis (X) by the first element, the second element having a second friction surface F2,
- a load element 21 pressing axially the second friction surface F2 towards the first friction surface F1 in order to transmit a torque between the first friction surface F1 and the second friction surface F2,
wherein the torque limiter comprises an adjustment ring 20 arranged axially between the load element 21 and a supporting element 101 of the first element, the load element 21 having a fulcrum portion 21A in contact with the adjustment ring 20 so that the axially relative position between the supporting element 101 and the fulcrum portion 21A of the load element 21 depends of the relative position between the adjustment ring 20 and the supporting element 101.

Thus, it's possible to change the load applied by the load element 21 on the frictions surface F1, F2 by changing the position of the adjustment ring 20 with respect to the supporting element 101.

The first element comprises a first cover 10A , the supporting element 101 being formed on this first cover 10A. The second element is a drive plate 24. The torque limiter has a pressure plate 22 which transmits the force transmitted from the aforementioned load element 21 towards the drive plate 24. Thus the pressure area is broadened.

The first element 10 comprises a second cover 10B, the drive plate 24 being tightened directly or indirectly between the pressure plate 22 and the second cover 10B.

Friction linings 23 are part of the first or second element and arranged between the second cover 10B and drive plate 24. Other friction linings are arranged between the pressure plate and drive plate.

The adjustment ring comprises a ramp arranged in the projection 201. The adjustment ring 20 and supporting element 101 have a slope extending along a circular segment in contact with each other. The slope are arranged so that a rotation of the adjustment ring 20 relative to the supporting element 101 allows to move axially the fulcrum portion 21A of the load element 20 (fig 3 and 3A).

The adjustment ring has a rotation driving mean 14, such as an ear 14. Thus the rotation driving mean 14 can be used to rotate the adjustment ring 20 to modify the load of the load element 21.

The supporting element 101 is arranged so that the rotation driving mean 14 can be driven without to remove the supporting member 101, that is to the say the first cover 10A. In plane perpendicular to the axis X passing through the supporting element 101, the rotation driving mean 14 and the damper D, the rotation driving mean 14 of the adjustment ring 20 is arranged radially outside the damper D and radially inside the supporting element 101.

The rotation driving mean 14 is a finger extending axially on both sides of the supporting member 101 of the first cover 10A.

The scope of the protection of the invention is set out in the annexed claims, but is under no circumstances limited to that described in this detailed explanation, which is provided for illustrative purposes, since, clearly, a person having skill in the art may, in light of what is explained above, be able to generate similar configurations without departing from the scope of the invention.

## Claims

1. Torque limiter (1) for use in motor vehicles which includes two covers which are connected to one another (10), an interspace (13) formed between the covers (10), at least one friction plate (23) within the aforementioned interspace (13), a drive plate (24) which is in contact with the aforementioned friction plate (23), and a load element (21) which, by pre-tensioning, applies a force to the friction plate (23), the torque limiter including an adjustment mechanism to adjust the force applied upon the aforementioned friction plates (23) by varying the pre-tensioning of the load element (21),
wherein the torque limiter includes an intermediary plate (20) positioned within the aforementioned interspace (13), at least one of the aforementioned cover (10) and the intermediary plate (20) comprising at least one adjustment element, **characterized in that** the torque limit adjustment is provided by rotating the intermediary plate.

2. Torque limiter (1) according to claim 1, ***wherein*** the aforementioned adjustment elements of the aforementioned cover (10) and intermediary plate (20) are provided with at least one projection (201) and one recess (202), each formed with a slope.

3. Torque limiter (1) according to claim 1, ***wherein*** the aforementioned adjustment elements are projections (201), one projection of the aforementioned cover coinciding with one projection of the intermediary plate (20), with at least one projection formed as a slope.

4. Torque limiter (1) according to claims 2-3, ***wherein*** at least one of the adjustment elements is in the form of a ramp.

5. Torque limiter (1) according to claim 2, ***wherein*** the aforementioned projection (201) is located on the intermediary plate (20), and the aforementioned recess (202) is located on the cover (10).

6. Torque limiter (1) according to claim 2, ***wherein*** the aforementioned projection (201) is located on the cover (10), and the aforementioned recess (202) is located on the intermediary plate (20).

7. Torque limiter (1) according to claims 2-6, ***wherein*** the aforementioned adjustment elements include, on their surface, teeth formed in order to engage with each other (2011, 2021).

8. Torque limiter (1) according to claims 2-6, ***wherein*** the surfaces of the aforementioned adjustment elements have a ribbed geometry.

9. Torque limiter (1) according to claims 2-8, ***wherein*** the aforementioned intermediary plate (20) includes an ear (14) to permit adjustment after installation.

10. Torque limiter (1) according to claim 9, ***wherein*** the aforementioned ear (14) is provided within the internal diameter of the intermediary plate (20).

11. Torque limiter (1) according to claim 9 or claim 10, ***wherein*** the aforementioned ear (14) is extended axially.

12. Torque limiter (1) according to claims 9 to11, wherein the ear (14) has a notch in order to facilitate adjustment after installation.

## Patentansprüche

1. Drehmomentbegrenzer (1) zur Verwendung in Kraftfahrzeugen, der zwei Abdeckungen (10), die miteinander verbunden sind, einen zwischen den Abdeckungen (10) ausgebildeten Zwischenraum (13), mindestens eine Reibplatte (23) in dem vorgenannten Zwischenraum (13), eine Antriebsplatte (24), die mit der vorgenannten Reibplatte (23) in Kontakt ist, und ein Lastelement (21) aufweist, das durch Vorspannen eine Kraft auf die Reibplatte (23) ausübt, wobei der Drehmomentbegrenzer einen Verstellmechanismus zum Verstellen der auf die vorgenannten Reibplatten (23) ausgeübten Kraft durch Variieren der Vorspannung des Lastelements (21) aufweist,
wobei der Drehmomentbegrenzer eine in dem vorgenannten Zwischenraum (13) positionierte Zwischenplatte (20) aufweist, wobei die vorgenannte Abdeckung (10) und/oder die Zwischenplatte (20) mindestens ein Verstellelement umfassen,
**dadurch gekennzeichnet, dass** die Drehmomentgrenzverstellung durch Drehen der Zwischenplatte bereitgestellt wird.

2. Drehmomentbegrenzer (1) nach Anspruch 1, wobei die vorgenannten Verstellelemente der vorgenannten Abdeckung (10) und Zwischenplatte (20) mit mindestens einem Vorsprung (201) und einer Aussparung (202) versehen sind, die jeweils mit einer Schräge ausgebildet sind.

3. Drehmomentbegrenzer (1) nach Anspruch 1, wobei die vorgenannten Verstellelemente Vorsprünge (201) sind, wobei ein Vorsprung der vorgenannten Abdeckung mit einem Vorsprung der Zwischenplatte (20) übereinstimmt, wobei mindestens ein Vorsprung als eine Schräge ausgebildet ist.

4. Drehmomentbegrenzer (1) nach Ansprüchen 2 - 3, wobei mindestens eines der Verstellelemente die Form einer Rampe hat.

5. Drehmomentbegrenzer (1) nach Anspruch 2, wobei der vorgenannte Vorsprung (201) an der Zwischenplatte (20) angeordnet ist und die vorgenannte Aussparung (202) an der Abdeckung (10) angeordnet ist.

6. Drehmomentbegrenzer (1) nach Anspruch 2, wobei der vorgenannte Vorsprung (201) an der Abdeckung (10) angeordnet ist und die vorgenannte Aussparung (202) an der Zwischenplatte (20) angeordnet ist.

7. Drehmomentbegrenzer (1) nach Ansprüchen 2 - 6, wobei die vorgenannten Verstellelemente auf ihrer Oberfläche Zähne aufweisen, die dazu ausgebildet sind, einander in Eingriff (2011, 2021) zu nehmen.

8. Drehmomentbegrenzer (1) nach Ansprüchen 2 - 6, wobei die Oberflächen der vorgenannten Verstellelemente eine gerippte Geometrie haben.

9. Drehmomentbegrenzer (1) nach Ansprüchen 2 - 8, wobei die vorgenannte Zwischenplatte (20) ein Auge (14) aufweist, um eine Verstellung nach der Installierung zu gestatten.

10. Drehmomentbegrenzer (1) nach Anspruch 9, wobei das vorgenannte Auge (14) innerhalb des inneren Durchmessers der Zwischenplatte (20) vorgesehen ist.

11. Drehmomentbegrenzer (1) nach Anspruch 9 oder Anspruch 10, wobei sich das vorgenannte Auge (14) axial erstreckt.

12. Drehmomentbegrenzer (1) nach Ansprüchen 9 bis 11, wobei das Auge (14) eine Kerbe hat, um eine Verstellung nach der Installierung zu erleichtern.

## Revendications

1. Limiteur de couple (1) destiné à être utilisé dans des véhicules automobiles, qui comprend deux couvercles (10) qui sont reliés l'un à l'autre, un espace intermédiaire (13) formé entre les couvercles (10), au moins une plaque de friction (23) à l'intérieur de l'espace intermédiaire (13) susmentionné, une plaque d'entraînement (24) qui est en contact avec la plaque de friction (23) susmentionnée, et un élément de charge (21) qui, par pré-tension, applique une force à la plaque de friction (23), le limiteur de couple comprenant un mécanisme de réglage pour régler la force appliquée sur les plaques de friction (23) susmentionnées en faisant varier la pré-tension de l'élément de charge (21),
le limiteur de couple comprenant une plaque intermédiaire (20) positionnée dans l'espace (13) susmentionné, le couvercle (10) et/ou la plaque intermédiaire (20) susmentionné comprenant au moins un élément de réglage,
**caractérisé en ce que** le réglage de la limite de couple est assuré par la rotation de la plaque intermédiaire.

2. Limiteur de couple (1) selon la revendication 1, les éléments de réglage susmentionnés du couvercle (10) et de la plaque intermédiaire (20) susmentionnés étant munis d'une saillie (201) et/ou d'un évidement (202), chacun étant formé avec une pente.

3. Limiteur de couple (1) selon la revendication 1, les éléments de réglage susmentionnés étant des saillies (201), une saillie du couvercle susmentionné coïncidant avec une saillie de la plaque intermédiaire (20), avec au moins une saillie formée comme une pente.

4. Limiteur de couple (1) selon les revendications 2 et 3, au moins un des éléments de réglage ayant la forme d'une rampe.

5. Limiteur de couple (1) selon la revendication 2, la saillie (201) susmentionnée étant située sur la plaque intermédiaire (20), et l'évidement (202) susmentionné étant situé sur le couvercle (10).

6. Limiteur de couple (1) selon la revendication 2, la saillie (201) susmentionnée étant située sur le couvercle (10), et l'évidement (202) susmentionné étant situé sur la plaque intermédiaire (20).

7. Limiteur de couple (1) selon les revendications 2 à 6, les éléments de réglage susmentionnés comprenant, sur leur surface, des dents (2011, 2021) formées pour venir en prise les unes avec les autres.

8. Limiteur de couple (1) selon les revendications 2 à 6, les surfaces des éléments de réglage susmentionnés ayant une géométrie nervurée.

9. Limiteur de couple (1) selon les revendications 2 à 8, la plaque intermédiaire (20) susmentionnée comprenant une patte (14) pour permettre le réglage après l'installation.

10. Limiteur de couple (1) selon la revendication 9, la patte (14) susmentionnée étant disposée dans le diamètre interne de la plaque intermédiaire (20).

11. Limiteur de couple (1) selon la revendication 9 ou 10, la patte (14) susmentionnée s'étendant axialement.

12. Limiteur de couple (1) selon les revendications 9 à 11, la patte (14) ayant une encoche afin de faciliter le réglage après l'installation.
